# EUROPÄISCHE PATENTANMELDUNG

(11) **EP 1 416 644 A2**
(43) Veröffentlichungstag der Anmeldung: **06.05.2004**
(21) Anmeldenummer: 03008252.3
(22) Anmeldetag: 09.04.2003
(51) Int. Cl.: H04B 1/38, H04M 1/60

(54) **Kommunikationsvorrichtung mit einem Autoradio und einem Handy**

(30) Priorität: 11.04.2002 DE 10215928
(71) Anmelder: GRUNDIG Aktiengesellschaft, 90471 Nürnberg (DE)
(72) Erfinder: Hofmann, Georg, 91058 Erlangen (DE); Nöth, Helmut, 90513 Zirndorf (DE); Slaweztki, Rainer, 90402 Nürnberg (DE)

(57) **Zusammenfassung**

Die Erfindung betrifft eine Kommunikationsvorrichtung mit einem Autoradio, einem Handy und einer Freisprechvorrichtung. Die Freisprechvorrichtung enthält ein Mikrofon und einen Lautsprecher. Das Handy weist ein integriertes Mikrofon und einen integrierten Hörer auf. Das Autoradio und das Handy sind über eine drahtlose Verbindungsstrecke miteinander koppelbar. Es ist eine Kommunikationsschnittstelle vorgesehen, die zur Detektion einer Annäherung des Handys an das Autoradio und zur Detektion des Aufenthalts des Handy in einem Nahbereich des Autoradios vorgesehen ist. Bei im Nahbereich des Autoradios befindlichem Handy werden Telefongespräche automatisch über das Mikrofon und den Lautsprecher der Freisprechvorrichtung geführt.

## Beschreibung

Die Erfindung betrifft eine Kommunikationsvorrichtung, die ein Autoradio, ein Handy und eine Freisprechvorrichtung aufweist, wobei die Freisprechvorrichtung ein Mikrofon und einen Lautsprecher aufweist, und wobei das Handy ein integriertes Mikrofon und einen integrierten Hörer aufweist.

Es ist bereits bekannt, in ein Kraftfahrzeug ein Autoradio einzubauen. Weiterhin ist es bereits bekannt, eine Handy-Halterung im Kraftfahrzeug zu befestigen, in welche ein Handy eingesetzt werden kann. Dem Handy kann eine im Kraftfahrzeug angeordnete Freisprechvorrichtung zugeordnet sein, die ein Mikrofon und einen Lautsprecher aufweist, wobei der Lautsprecher im allgemeinen der dem Autoradio zugeordnete Lautsprecher ist. Das Handy selbst weist ebenfalls ein Mikrofon sowie einen integrierten Hörer auf. Ist das Handy in die im Kraftfahrzeug vorgesehene Handy-Halterung eingesetzt, dann können ein- und ausgehende Telefongespräche unter Verwendung der. Freisprechvorrichtung geführt werden.

Weiterhin ist es bereits bekannt, ein Telefon fest in ein Kraftfahrzeug einzubauen. Dieses fest eingebaute Telefon ist im allgemeinen an eine Aussenantenne angeschlossen. Deshalb ist die Qualität von mittels des fest eingebauten Telefons geführten Gesprächen in der Regel höher als die Qualität eines mittels eines Handys geführten Telefongesprächs - ohne Aussenantenne.

Die Aufgabe der Erfindung besteht darin, eine neue Kommunikationsvorrichtung mit einem Autoradio, einem Handy und einer Freisprechvorrichtung anzugeben, bei welcher die Bedienungsfreundlichkeit erhöht ist.

Diese Aufgabe wird durch eine Kommunikationsvorrichtung mit den im Anspruch 1 angegebenen Merkmalen gelöst. Vorteilhafte Ausgestaltungen und Weiterbildungen der Erfindung ergeben sich aus den abhängigen Ansprüchen. Die Vorteile der Erfindung bestehen darin, dass der Benutzer das Handy nicht in eine im Kraftfahrzeug befestigte Handy-Halterung einschieben muss, um Telefonate unter Verwendung der Freisprechvorrichtung führen zu können. Es ist vielmehr ausreichend, das Handy in den Nahbereich des Autoradios zu bringen, um das Autoradio und das Handy über eine drahtlose Verbindungsstrecke miteinander zu verkoppeln, so dass Telefonate automatisch unter Verwendung der Freisprechvorrichtung geführt werden. Das Handy kann dabei beispielsweise in der Brusttasche oder Seitentasche des Sakkos des Fahrers des Kraftfahrzeugs verbleiben. Die zur Führung des Telefonats notwendige Signalübertragung zwischen dem Handy und dem Autoradio bzw. der Freisprechvorrichtung erfolgt drahtlos.

Vorzugsweise ist die drahtlose Verbindungsstrecke eine Funkverbindungsstrecke, deren Reichweite kleiner als 10 Meter ist. Dadurch ist in der Regel sichergestellt, dass die über diese Strecke erfolgende Kommunikation für Dritte nicht störend ist. Es kann aber auch eine Ifrarotverbindung verwendet werden, um die nötigen Daten auszutauschen, jedoch muss in diesem Fall eine "Sichtverbindung" bestehen.

In vorteilhafter Weise erfolgt die Kommunikation zwischen dem Handy und dem Autoradio unter Verwendung des Bluetooth-Standards. Dies hat den Vorteil, dass das Handy und das Autoradio mit hoher Wahrscheinlichkeit miteinander koppelbar sind und weniger Abstimmungsaufwand anfällt, auch wenn die genannten Geräte nicht speziell aufeinander abgestimmt sind.

Durch die Merkmale des Anspruchs 5 wird erreicht, dass jedes Eintreten des Handys in den Nahbereich des Autoradios und jegliches Verlassen des Nahbereichs des Autoradios sofort registriert wird, so dass die gegebenenfalls notwendige Umschaltung des Gesprächs von der Freisprechvorrichtung im Kraftfahrzeug auf das Mikrofon und den Hörer des Handys bzw. umgekehrt verzögerungsfrei erfolgen kann.

Gemäss der im Anspruch 6 angegebenen Weiterbildung der Erfindung werden die Fahrzeugtüren des Kraftfahrzeugs automatisch entriegelt, wenn das Handy in den Nahbereich des Autoradios gebracht wird. In diesem Fall braucht der Fahrer des Kraftfahrzeugs die Fahrzeugtüren weder durch Betätigung eines mechanischen Fahrzeugschlüssels noch durch manuelle Betätigung einer Fernsteuerung entriegeln. Das Handy kann als Verbindung für die Zugangsund/oder Nutzungsfreigabe und/oder Nutzungsblockade verwendet werden. Es dient im Weiteren dazu einen Benutzer zu identifizieren und die Berechtigung des Benutzers zu überprüfen.

Gemäss der im Anspruch 7 angegebenen Weiterbildung der Erfindung werden die Fahrzeugtüren des Kraftfahrzeugs automatisch verrfegelt, wenn das Handy aus dem Nahbereich des Autoradios entfernt wird. Ein Verschliessen der Fahrzeugtüren-mittels eines mechanischen Fahrzeugschlüssels oder durch manuelle Betätigung einer Fernsteuerung ist nicht notwendig.

In vorteilhafter Weise kann die zwischen dem Handy und dem Autoradio bestehende drahtlose Verbindungsstrecke auch zur Übertragung von Musiksignalen verwendet werden. Die Quelle dieser Signale kann eine in das Handy eingelegte Speicherkarte sein, beispielsweise eine Multimediakarte. Die Quelle dieser Signale kann auch das Internet sein, aus welchem mittels des Handys Musiktitel heruntergeladen, anschliessend drahtlos zum Autoradio übertragen und über dessen Lautsprecher wiedergegeben werden, oder in bzw. auf ein anderes bzw. weiteres Medium gespeichert werden. Es kann folglich ein Download während beispielsweise der Fahrt vorgenommen werden.

Eine vorteilhafte Weiterbildung der Erfindung besteht darin, in das Kraftfahrzeug ein Autotelefon fest einzubauen und bei im Nahbereich des Autoradios befindlichem Handy Telefongespräche automatisch nur über das fest eingebaute Autotelefon zu führen. Sobald der Benutzer sich mit dem Handy dem Kraftfahrzeug nähert und in einem Umgebungsbereich, dem Nahfeld befindet, erkennt die Erfindung dies und es wird eine Verbindung zwischen dem Handy und dem Autotelefon aufgebaut. Ein Telefonieren über das Handy erfolgt dann automatisch über eine Verbindung mit dem Autotelefon, welche die Verbindung zum gewünschten Teilnehmer herstellt. Mit dem Herstellen der Verbindung wird zugleich das Handy identifiziert und über das Handy der Benutzer. Es übernimmt dann das Handy die Funktion eines Autoschlüssels bzw. eines keyless Entry-Systems oder die Funktion einer Funkfernentriegelung. Es ersetzt in diesem Fall das Handy die Funkfernbedienung für das Kraftfahrzeug.

Auf diese Weise ist es möglich Gespräche vom Autotelefon an das Handy und vom Handy an das Autotelefon zu übergeben bzw. Anrufe am Handy kommen dann am im Kraftfahrzeug eingebauten Telefon an, wenn sich das Handy im Kraftfahrzeug befindet Anrufe am Autotelefon kommen dann am Handy an, wenn sich das Handy nicht im Kraftfahrzeug befindet, bzw. außerhalb eines Wirkkreises um das Kraftfahrzeug.
Da dieses an eine Aussenantenne angeschlossen ist, ist die Qualität des geführten Telefonats grösser als die Qualität eines über ein Handy geführten Telefonats. Dieser Umstand ergibt sich, da die Aussenantenne weniger Abschirmung durch die Karosserie des Kraftfahrzeuges erfährt als die im Handy integrierte Antenne. Wird im Fahrzeug telefoniert entsteht somit weniger sogenannter "Funk-Smog". Ein deutlicher Nutzungsvorteil ergibt sich für den Nutzer, da dieser das Handy nicht erst elektrisch und mechanisch mit dem Autotelefon verbinden muss, sondern diese Verbindung selbsttätig erfolgt. Voraussetzung ist lediglich, dass beide Telefone eine Zugangsberechtigung zum Telefonnetz haben und zumindest temporär über dieselbe Telefonnummer erreichbar sind.

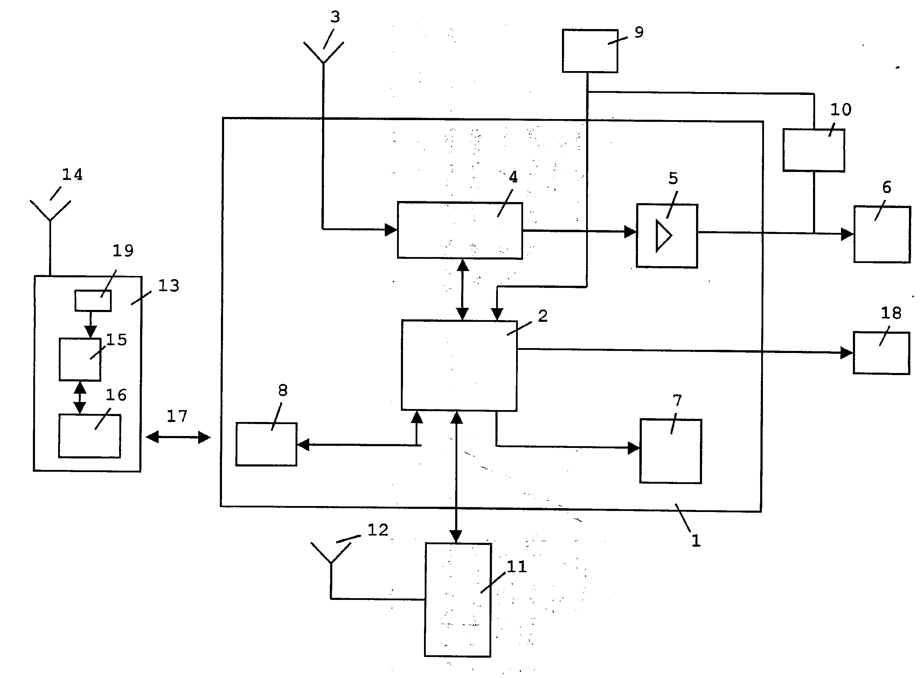

Weitere vorteilhafte Eigenschaften der Erfindung ergeben sich aus der nachfolgenden Erläuterung eines Ausführungsbeispiels anhand der Figur.

Diese zeigt ein Blockschaltbild einer Kommunikationsvorrichtung, die ein Handy 13, ein fest in ein Kraftfahrzeug eingebautes Autotelefon 11, ein Autoradio 1 und eine Freisprechvorrichtung 6, 9, 10 aufweist.

Das Autoradio 1 ist an eine Antenne 3 angeschlossen und weist eine Empfangs- und Signalverarbeitungseinheit 4, einen Verstärker 5, eine Steuereinheit 2, ein Display 7 und eine Kommunikationsschnittstelle 8 auf. Die Ausgangssignale des Verstärkers 5 werden einem Lautsprecher 6 zugeführt. Dieser Lautsprecher ist auch Bestandteil der Freisprechvorrichtung, welcher weiterhin ein Mikrofon 9 und eine Echo- und Rauschunterdrückungseinheit 10 angehören.

Die Steuereinheit 2 des Autoradios 1 ist weiterhin - vorzugsweise über eine im Kraftfahrzeug befindliche Busvörrichtung-mit einem Türverriegelungselement 18, welches als Zugangsberechtigungs- und Benutzeridentifizierungselement ausführbar ist, des Kraftfahrzeugs verbunden

Weiterhin ist die Steuereinheit mit dem fest in das Kraftfahrzeug eingebauten Autotelefon 11 verbunden, welchem eine am Dach des Kraftfahrzeugs angeordnete Antenne 12 zugeordnet ist.

Das Handy 13 hat eine Antenne 14, eine Steuereinheit 15, eine Kommunikationsschnittstelle 16 und einen Datenträgereinführschlitz, in welchen eine Speicherkarte 19 eingeführt ist. Bei dieser Speicherkarte 19 handelt es sich vorzugsweise um eine Multimediakarte, auf welcher Musikstücken entsprechende Signale abgespeichert sind. Weiterhin weist das Handy - wie allgemein üblich - ein Mikrofon und einen Hörer auf.

Gemäss der Erfindung ist das Handy 13 mit dem Autoradio 1 über eine drahtlose Verbindungsstrecke 17 koppelbar. Bei dieser drahtlosen Verbindungsstrecke handelt es sich um eine Funkverbindungsstrecke, deren Reichweite gering ist. Eine Übertragung von Signalen über diese Funkverbindungsstrecke erfolgt gemäss dem Bluetooth-Standard.

Um die erforderliche Kopplung zwischen dem Handy 13 und dem Autoradio 1 herzustellen, weisen das Autoradio und das Handy eine Kommunikationsschnittstelle 8 bzw. 16 auf. Diese Kommunikationsschnittstelle, die nach dem Bluetooth-Standard arbeitet, ist unter anderem dazu vorgesehen, eine Annäherung des Handys an das Autoradio sowie einen Aufenthalt des Handys in einem Nahbereich des Autoradios zu detektieren. Zu diesem Zweck wird mittels der Kommunikationsschnittstellen in vorgegebenen kurzen Zeitabständen permanent überprüft, ob sich das Handy im Nahbereich des Autoradios befindet oder nicht. Beispielsweise wird von der Kömmunikationsschnittstelle 8 des Autoradios in kurzen Zeitabständen permanent ein Abfragesignal "Gerät suchen" ausgestrahlt. Befindet sich das Handy im Nähbereich des Autoradios, dann generiert die Kommunikationsschnittstelle 16 des Handy zur Beantwortung des Abfragesignals ein Antwortsignal "Gerät gefunden", welches an die Kommunikationsschnittstelle 8 des Autoradios zurückübertragen wird. Dieses Antwortsignal enthält auch eine Kennung für das antwortende Handy, so dass sichergestellt ist, dass nur das korrekte Handy an das Autoradio koppelbar ist bzw. gekoppelt wird.

Wird detektiert, dass sich das Handy im Nahbereich des Autoradios befindet, dann werden ein- oder ausgehende Telefongespräche automatisch über das Mikrofon 9 und den Lautsprecher 6 der Freisprechvorrichtung geführt. Die dazu notwendige Übertragung aller zur Führung des Telefonats notwendigen Audio-, Informations- und Steuerungsdaten zwischen dem Handy und dem Autoradio erfolgt über die drahtlose Verbindungsstrecke 17. Das Handy kann sich dabei in einer Tasche des Sakkos des Fahrers, auf dem Beifahrersitz, in einer Ablage des Armaturenbrettes oder an beliebiger anderer Stelle innerhalb des Kraftfahrzeugs befinden. Es muss insbesondere nicht in einen speziellen Handy-Halter eingeführt sein und benötigt keinen Stecker bzw. keine elektrische Verbindung. Dies bedeutet für den Benutzer eine Bedienungserleichterung und ― wegen des Wegfalls der Notwendigkeit eines Handy-Halters ― auch eine Einsparung von Kosten. Gemäss einer vorteilhaften Weiterbildung der Erfindung wird bei einem Eintreten des Handys in den Nahbereich des Autoradios von der Steuereinheit 2 des Autoradios ein Steuersignal an einen Fahrzeugbus ausgegeben, an welchen ein Verriegelungselement 18 für die Kraftfahrzeugtüren angeschlossen ist. Aufgrund des genannten Steuersignals erfolgt bei einem Eintreten des Handys in den Nahbereich des Autoradios ein automatisches Entriegeln der Türen des Fahrzeugs, die Entriegelung kann aber auch alternativ durch Betätigung einer bestimmten Taste oder Tastenkombination am Handy ausgelöst werden. Dadurch ist der Fahrer des Fahrzeugs von einem manuellen mechanischen Entriegeln der Fahrzeugtüren mittels des Fahrzeugschlüssels bzw. von einem ferngesteuerten Entriegeln der Fahrzeugtüren durch Betätigung eines Knopfes eines elektronischen Fahrzeugschlüssels befreit.

Vorzugsweise wird bei einer Entfernung des Handys aus dem Nahbereich des Autoradios eine automatische Verriegelung der Fahrzeugtüren durchgeführt. Zu diesem Zweck generiert die Steuereinheit 2 dann, wenn ihr die Kommunikationsschnittstelle 8 ein Fehlen des Handys im Nahbereich des Autoradios signalisiert, ein Steuersignal. Dieses wird über den Fahrzeugbus an das Verriegelungselement 18 weitergeleitet, um die Fahrzeugtüren zu verriegeln.

Eine vorteilhafte Weiterbildung der Erfindung besteht darin, vom Handy 13 über die drahtlose Verbindungsstrecke 17 zum Autoradio 1 Musiksignale zu übertragen, die über den Lautsprecher 6 wiedergegeben werden. Die Quelle dieser Musiksignale kann ein in einen Datenträgereinführschlitz des Handys eingeführter Datenträger sein, beispielsweise eine Multimediakarte. Die Quelle dieser Musiksignale kann aber auch das Internet sein, aus welchem mittels des Handys 13 gewünschte Musikstücke heruntergeladen werden. Diese Musikstücke werden im Handy zwischengespeichert, gegebenenfalls dekomprimiert, über die drahtlose Verbindungsstrecke 17 zum Autoradio 1 übertragen und über den Lautsprecher 6 wiedergegeben. Es besteht jedoch auch die Möglichkeit, dass die Musikstücke über das Handy 13 heruntergeladen werden und vom Handy zeitgleich an eine Einheit im Kraftfahrzeug oder zum Autoradio 1 geleitet werden, dort dekomprimiert und gespeichert werden. Es ist folglich möglich während der Fahrt Musikstücke herunterzuladen.

Weist die Kommunikationsvorrichtung gemäss der Erfindung das fest in das Kraftfahrzeug eingebaute Telefon 11 auf, dann besteht eine vorteilhafte Weiterbildung der Erfindung darin, bei einem Eintreten des Handys in den Nahbereich des Autoradios Telefongespräche automatisch über das fest eingebaute Telefon 11 und die Freisprechvorrichtung zu führen. Das Telefon 11 ist an eine am Auto befindliche Aussenantenne angeschlossen, so dass sichergestellt ist, dass Telefonate mit guter Sprachqualität geführt werden können. Voraussetzung ist, dass das Handy 13 und das Telefon 11 Zugang zum Telefonnetz haben und über ein und dieselbe Telefonnummer erreichbar sind. Verlässt das Handy den Nahbereich des Autoradios, dann erfolgt eine Umschaltung des Telefonats vom Telefon 11 bzw. der Freisprechvorrichtung auf das Handy 13 bzw. dessen Mikrofon und dessen Hörer.

### Bezugszeichenliste:

- 1: Autoradio
- 2: Steuereinheit
- 3: Antenne
- 4: Empfangs- und Signalverarbeitungseinheit
- 5: Verstärker
- 6: Lautsprecher
- 7: Display
- 8: Kommunikationsschnittstelle
- 9: Mikrofon
- 10: Echo- und Rauschunterdrückungseinheit
- 11: fest eingebautes Autotelefon
- 12: Antenne
- 13: Handy
- 14: Antenne
- 15: Steuereinheit
- 16: Kommunikationsschnittstelle
- 17: drahtlose Verbindungsstrecke
- 18: Autotür-Verriegelungselement
- 19: Speicherkarte

## Patentansprüche

1. Kommunikationsvorrichtung mit einem Autoradio, einem Handy und einer Freisprechvorrichtung, wobei die Freisprechvorichtung ein Mikrofon und einen Lautsprecher aufweist, und
wobei das Handy ein integriertes Mikrofon und einen integrierten Hörer aufweist,
**dadurch gekennzeichnet, dass**
- das Autoradio (1) und das Handy (13) über eine drahtlose Verbindungsstrecke (17) miteinander koppelbar sind,
- das Autoradio (1) und das Handy (13) eine Kommunikationsschnittstelle (8, 16) aufweisen, die zur Detektion einer Annäherung des Handys an das Autoradio und zur Detektion des Aufenthalts des Handys in einem Nahbereich des Autoradios vorgesehen ist, und
- ein- oder ausgehende Telefongespräche bei im Nahbereich des Autoradios befindlichem Handy automatisch über das Mikrofon (9) und den Lautsprecher (6) der Freisprechvorrichtung geführt werden

2. Kommunikationsvorrichtung nach Anspruch 1,
**dadurch gekennzeichnet, dass**
die drahtlose Verbindungsstrecke (17) eine Funkverbindungsstrecke oder eine Infrarotverbindungsstrecke ist.

3. Kommunikationsvorrichtung nach Anspruch 1 oder 2,
**dadurch gekennzeichnet, dass**
die Reichweite der drahtlosen Verbindungsstrecke (17) kleiner als 10 Meter ist.

4. Kommunikationsvorrichtung nach einem der vorhergehenden Ansprüche,
**dadurch gekennzeichnet, dass**
die Kommunikationsschnittstelle (8, 16) nach dem Bluetooth-Standard arbeitende Kommunikationsmodule aufweist.

5. Kommunikationsvorrichtung nach einem der vorhergehenden Ansprüche,
**dadurch gekennzeichnet, dass**
die Kommunikationsschnittstelle (8, 16) in vorgegebenen kurzen Zeitabständen permanent überprüft, ob sich das Handy im Nahbereich des Autoradios befindet.

6. Kommunikationsvorrichtung nach einem der vorhergehenden Ansprüche,
**dadurch gekennzeichnet, dass**
bei einem Eintreten des Handys in den Nahbereich des Autoradios eine automatische Benutzeridentifizierung und eine Überprüfung der Zugangsberechtigung des identifizierten Benutzers erfolgt.

7. Kommunikationsvorrichtung nach einem der vorhergehenden Ansprüche,
**dadurch gekennzeichnet, dass**
bei einem Eintreten des Handys in den Nahbereich des Autoradios eine automatische Entriegelung der Fahrzeugtüren erfolgt.

8. Kommunikationsvorrichtung nach einem der vorhergehenden Ansprüche,
**dadurch gekennzeichnet, dass**
bei einer Entfernung des Handys aus dem Nahbereich des Autoradios eine automatische Verriegelung der Fahrzeugtüren erfolgt.

9. Kommunikationsvorrichtung nach einem der vorhergehenden Ansprüche,
**dadurch gekennzeichnet, dass**
der Lautsprecher der Freisprechvorrichtung der dem Autoradio zugehörige Lautsprecher ist.

10. Kommunikationsvorrichtung nach einem der vorhergehenden Ansprüche,
**dadurch gekennzeichnet, dass**
das Handy mit einer Speicherkarte (19) versehen ist, auf welcher Audiosignale abgespeichert sind, dass die von der Speicherkarte gelesenen Audiosignale bei im Nahbereich des Autoradios befindlichem Handy über die drahtlose Verbindungsstrecke (17) zum Autoradio (1) übertragen und über den Lautsprecher (6) des Autoradios wiedergegeben werden.

11. Kommunikationsvorrichtung nach einem der vorhergehenden Ansprüche,
**dadurch gekennzeichnet, dass**
das Handy zum Empfang von aus dem Internet abgeleiteten Audiosignalen vorgesehen ist, dass die aus dem Internet abgeleiteten Audiosignale über die drahtlose Verbindungsstrecke (17) zum Autoradio (1) übertragen und über den Lautsprecher (6) des Autoradios wiedergegeben werden.

12. Kommunikationsvorrichtung nach einem der vorhergehenden Ansprüche,
**dadurch gekennzeichnet, dass**
sie weiterhin ein fest in ein Kraftfahrzeug eingebautes Autotelefon (11) enthält und dass bei im Nahbereich des Autoradios (1) befindlichem Handy (13) das Handy (13) deaktiviert und ein- und ausgehende Telefongespräche über das fest eingebaute Autotelefon (11) geführt werden.

13. Kommunikationsvorrichtung nach einem der vorhergehenden Ansprüche,
**dadurch gekennzeichnet, dass**
das Autoradio (1) und das Handy (13) Daten unterschiedlicher Art bidirektional austauschen.
